# EUROPEAN PATENT APPLICATION

(11) **EP 4 576 662 A1**
(43) Date of publication of application: **25.06.2025**
(21) Application number: 23217737.8
(22) Date of filing: 18.12.2023
(51) Int. Cl.: H04L 9/40, H04L 1/00, H04L 12/40, G06F 11/07

(54) **END-TO-END PROTECTION METHOD**

(71) Applicant: STMicroelectronics International N.V., 1228 Plan-les-Ouates, Geneva (CH)
(72) Inventor: RENNIG, Fred, 85405 Nandlstadt (DE)
(74) Representative: Cabinet Beaumont

(57) **Abstract**

The present disclosure relates to an electronical device adapted to execute a communication via a communication bus, and comprising a hardware component, different from a processor, and able to execute directly an end-to-end protection method of said communication, said hardware component being capable of management states of said electronical device, wherein:
- when said communication starts and said device receives a first message that is validated by the end-to-end protection method, the state of the electronical device changes from a no monitoring state (701) to a initialization state (702); and
- when said device receives a specific second message, the state of the electronical device changes from a the initialization state (702) to a monitoring state (703).

## Description

### Technical field

The present disclosure relates generally to a communication between two, or more, electronical devices, and more particularly, concerns an end-to-end protection method of a wired communication between two, or more, electronical devices or of a wireless communication between two, or more, electronical devices. The present disclosure discloses more precisely a state management of such an electronical device.

### Background art

In a communication, end-to-end protection concerns the verification of the transmission of a message. More particularly, end-to-end protection relates to the verification of the integrity of a transmitted message, to the verification of the address of the receiver of the message, etc.

A device adapted to execute a communication may present several working states affecting the end-to-end protection applicated to the communication.

It would be desirable to at least partly improve certain aspects of known methods for managing states of an electronical devices executing these end-to-end protection methods.

### Summary of Invention

There is a need for devices executing a communication via a bus and using end-to-end protection that comprises less components.

There is a need for devices executing a communication via a CAN bus and using end-to-end protection that comprises less components.

There is a need for devices executing a communication via a CAN FD (light) bus and using end-to-end protection that comprises less components.

There is a need for a device executing such a communication and comprising a state-machine capable of managing its state during the execution of the communication.

One embodiment addresses all or some of the drawbacks of known devices executing an end-to-end protection method.

One embodiment provides an electronical device adapted to execute a communication via a communication bus, and comprising a hardware component, different from a processor, and able to execute directly an end-to-end protection method of said communication, said hardware component being capable of management states of said electronical device, wherein:
- when said communication starts and said device receives a first message that is validated by the end-to-end protection method, the state of the electronical device changes from a no monitoring state to a initialization state; and
- when said device receives a specific second message, the state of the electronical device changes from a the initialization state to a monitoring state.

Another embodiment provides a method for managing states of an electronical device adapted to execute a communication via a communication bus, said method being executed directly by a hardware component of said electronical device different from a processor, and able to execute directly an end-to-end protection method of said communication, wherein said method comprises the following steps :
- when said communication starts and said device receives a first message that is validated by the end-to-end protection method, the state of the electronical device changes from a no monitoring state to an initialization state; and
- when said device receives a specific second message, the state of the electronical device changes from a the initialization state to a monitoring state.

According to an embodiment, said second specific message comprises a command that sets a configuration bit of said electronical device.

According to an embodiment, when the electronic device is in the initialization state or in the monitoring state, if an error counter of the end-to-end protection method reaches limit value, the electronic device goes back to the no monitoring mode.

According to an embodiment, when said device is in the no monitoring state, said error counter of the end-to-end protection method can be read and/or cleared.

According to an embodiment, when said device is in the no monitoring state, all received messages are send to said device by the end-to-end protection method.

According to an embodiment, said first message and said specific second message comprise a control field data.

According to an embodiment, when said device is in the no monitoring state, a verification method of said control field data, said verification method being comprised in said end-to-end protection method, is not executed at each reception of a message.

According to an embodiment, when said device is in the initialization state, said verification method is executed at each reception of a message.

According to an embodiment, when said device is in the monitoring state, said verification method is executed at each reception of a message.

According to an embodiment, the communication bus is a controller area network bus.

According to an embodiment, the communication bus is a controller area network flexible data-rate bus.

According to an embodiment, the communication bus is a known under the trade name "controller area network flexible data-rate light bus".

According to an embodiment, the communication bus is a known under the trade "name controller area network flexible data-rate XL bus".

According to an embodiment, the hardware component is a finite-state-machine.

### Brief description of drawings

The foregoing features and advantages, as well as others, will be described in detail in the following description of specific embodiments given by way of illustration and not limitation with reference to the accompanying drawings, in which:
Figure 1 illustrates, very schematically and in bloc form, an embodiment of a system, and a wired communication executed within the system;
Figure 2 illustrates, very schematically and in bloc form, a structure of a message transmitted during the communication of figure 1;
Figure 3 illustrates, very schematically and in bloc form, an example of the generation of a control field data of a message of Figure 2;
Figure 4 illustrates, in bloc forms, a communication protected by an end-to-end protection method.
Figure 5 illustrates an example of generation method of an embodiment of an end-to-end protection method;
Figure 6 illustrates an example of verification method of an embodiment of an end-to-end protection method; and
Figure 7 illustrates a state-diagram illustrating the state management of a device of the system of figure 1.

### Description of embodiments

Like features have been designated by like references in the various figures. In particular, the structural and/or functional features that are common among the various embodiments may have the same references and may dispose identical structural, dimensional and material properties.

For the sake of clarity, only the operations and elements that are useful for an understanding of the embodiments described herein have been illustrated and described in detail.

Unless indicated otherwise, when reference is made to two elements connected together, this signifies a direct connection without any intermediate elements other than conductors, and when reference is made to two elements coupled together, this signifies that these two elements can be connected or they can be coupled via one or more other elements.

In the following disclosure, unless indicated otherwise, when reference is made to absolute positional qualifiers, such as the terms "front", "back", "top", "bottom", "left", "right", etc., or to relative positional qualifiers, such as the terms "above", "below", "higher", "lower", etc., or to qualifiers of orientation, such as "horizontal", "vertical", etc., reference is made to the orientation shown in the figures.

Unless specified otherwise, the expressions "around", "approximately", "substantially" and "in the order of" signify within 10 %, and preferably within 5 %.

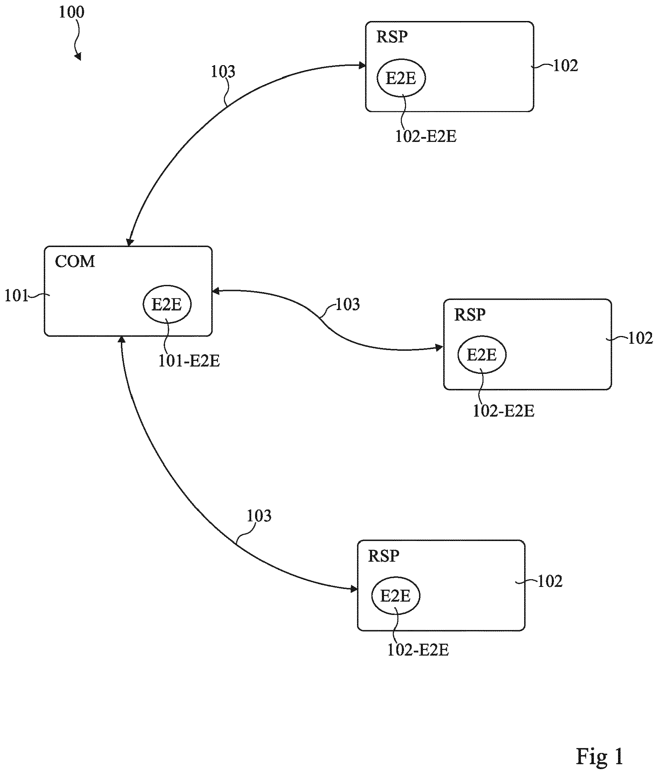

Figure 1 illustrates, very schematically and in bloc form, an embodiment of a system 100 and a wired communication executed within the system 100.

System 100 comprises at least one commander device 101 (COM), called hereafter commander 101, and one or more responder devices 102 (RSP), called hereafter responders 102. In the illustrated example of Figure 1, system 100 comprises one commander 101 and three responders 102. Commander 101 and responders 102 are all electronical devices, and can be electronical component unit (ECU).

According to one embodiment, system 100 is a complicated electronical system, such as a personal computer, a smart phone, a car, etc. Commander 101 may comprise or be a main part of system 100, such as a main processor. Responders may be secondary part of system 100, such as secondary processors, secondary electronical component units, secondary motors.

According to a preferred embodiment, system 100 is the electronical part of a car. In that case, commander 101 could be a controlling part of a network of the car, or the central unit of the car, or the main communication router of the car, and responders 102 are devices associated with one or more features of the car. According to an example, a responder 102 can be electronical component associated with a windscreen washer system, a headlight controller, an air conditioning system, a battery, etc.

According to one embodiment, commander 101 is able to execute a wired communication with each responder 102. More particularly, commander 101 is linked to each responder 102 via a communication bus 103.

The communication bus 103 can be of any types of communication buses, such as a one-cable bus or a multi-cable bus. According to an embodiment, the communication bus 103 can be chosen in the group comprising: a controller area network bus (CAN Bus), a controller area network bus flexible data-rated (CAN FD Bus), a communication bus known under the trade name "controller area network flexible data-rate light bus" (CAN FD (Light) Bus), a communication bus known under the trade name "controller area network flexible data-rate XL bus" (CAN FD XL Bus), an inter-integrated circuit bus (I2C Bus), etc. According to a preferred embodiment, the communication bus 103 is a communication bus known under the trade name "controller area network flexible data-rate light bus" (CAN FD (Light) Bus).

A communication between commander 101 and one or more responders 102 can use a typical commander/responder scheme, formerly known as the master/slave scheme. More particularly, and according to an example, commander 101 is able to send messages comprising one or more commands and/or one or more answers to responders 102 and is able to receive messages comprising answers from the responders 102. On the other hand, responders 102 are able to send messages comprising one or more answers to commander 101, and are able to receive messages comprising one or more commands and/or one or more answers from the commander 101.

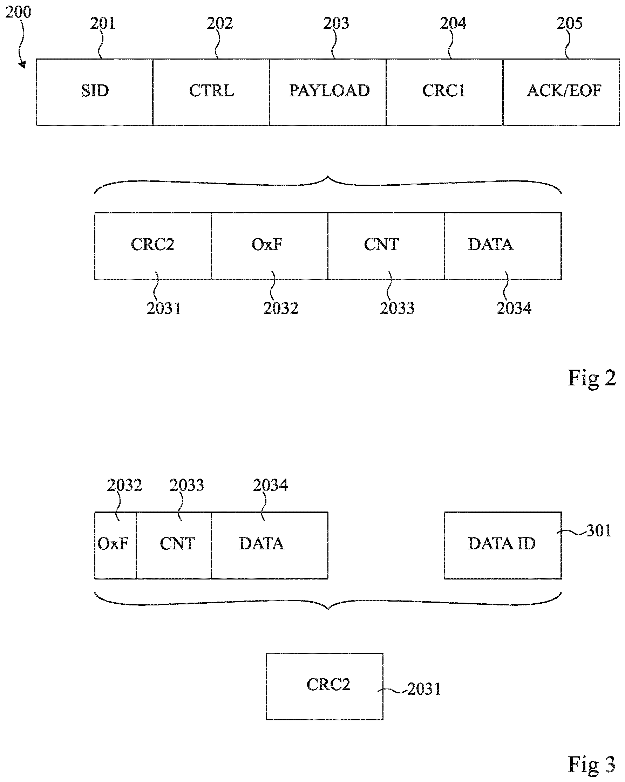

A message transmitted via communication bus 103 has a specific structure, that is described in more details in relation with Figure 2. More particularly, each message comprises at least one control field data, which generation is described in more details in relation with Figure 3. However, commander 101 and responder 102 are able to exchange several types of messages. More particularly, commander 101 can send three different types of messages.

A first type is a broadcast message that is send to every responders 102 of system 100. Commander 101 does not expect an answer from a broadcast message. An example of a broadcast message is a "go to sleep" message wherein commander 101 commands all responders 102 to go into a sleep mode.

A second type is a unicast message that is send to only one responder 102 of system 100. Commander 101 expects an answer from a unicast message, and waits for it. An example of a unicast message is a data request message wherein commander 101 requests data from a unique responder 102. Another example of a unicast message is a data writing request message, wherein commander 101 wants to write data in a memory of in registers of a unique responder 102, and requests the authorization.

A third type is a multicast message that is send to several responders 102 of system 100. Commander 101 does not expect an answer from a multicast message. An example of a multicast message is a data programing request message wherein commander 101 requests to program data into a series of responders 102.

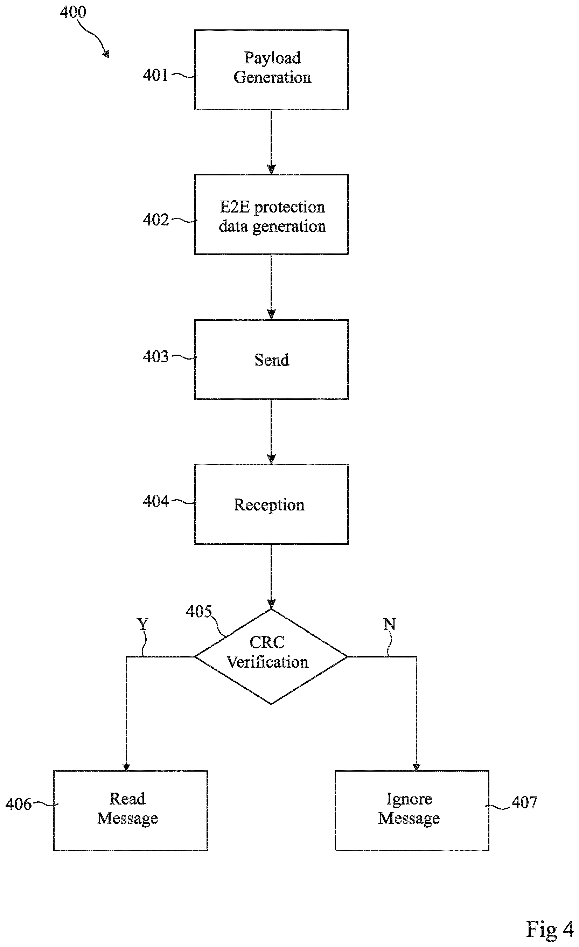

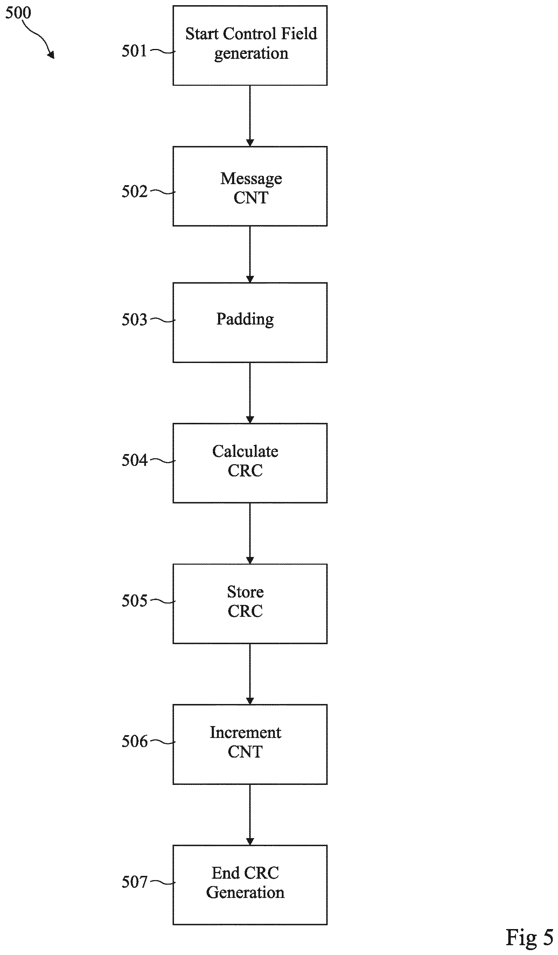

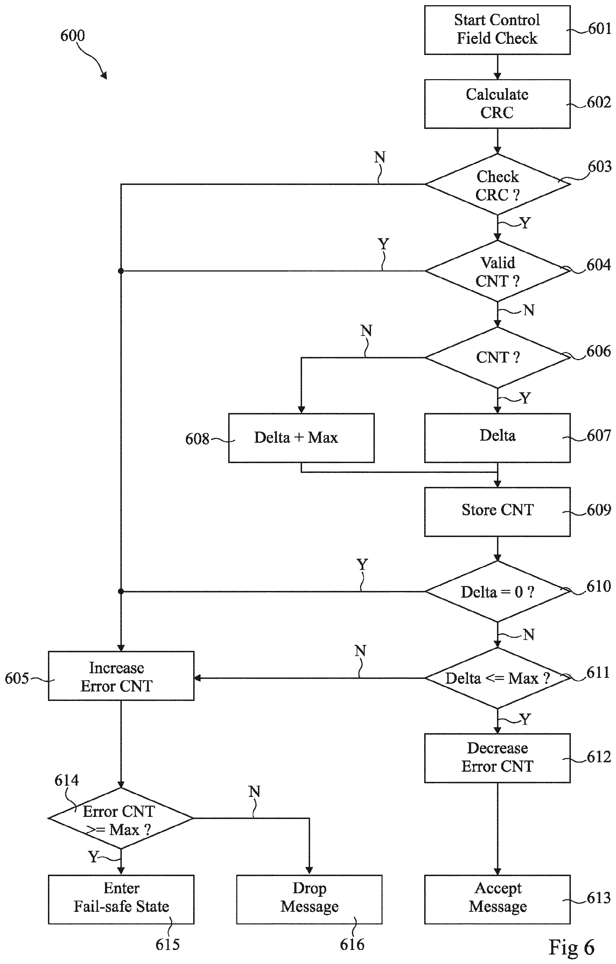

According to one embodiment, commander 101 and responders 102 are all capable of executing end-to-end protection method in order to ensure the safety of exchanged messages. An end-to-end protection method is used to detect transmission errors, such as a message sent to a wrong responder 102, a message sent partially, a message sent several times, etc. More particularly, an end-to-end protection method comprises a control field data generation method of a sent message, and a control field data verification method of a received message. An example of a communication within system 100 using the end-to-end protection method is described in more details in relation with Figure 4. A detailed example of a control field data generation method of a sent message is described in details in relation with Figure 5. A detailed example of a control field data verification method of a received message is described in details in relation with Figure 6.

According to one embodiment, there is at least one responder 102 that comprises a hardware component 102-E2E capable of executing the end-to-end protection method. More particularly, said at least one responder 102 is not using a software, implemented by a processor, to execute the end-to-end protection method. According to a preferred embodiment, the hardware component 102-E2E is different from a processor, and is monolithic component, such as a logic circuit or a finite state machine.

According to an example, commander 101 also comprises a hardware component 101-E2E capable of executing the end-to-end protection method, of the type of hardware component 102-E2E. According to a variant, commander 101 comprises a processor able to implement a software executing the end-to-end protection method.

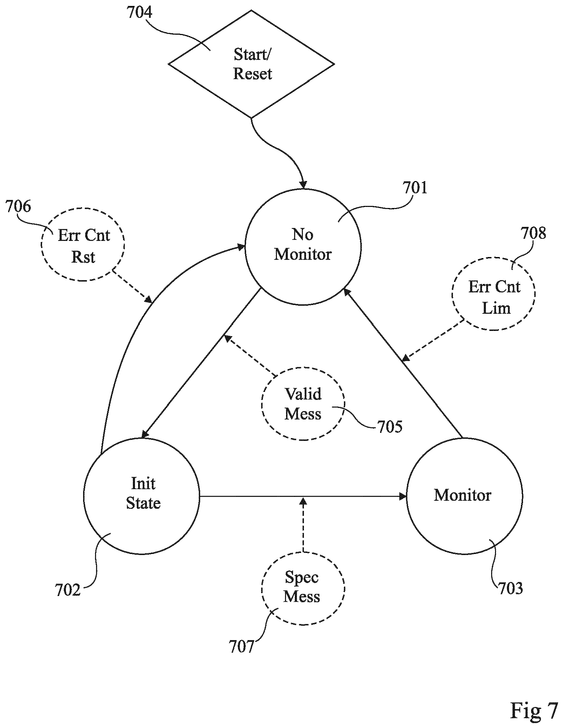

According to an embodiment, commander 101 and responders 102 are all designed to present several operational states, or working states, called hereafter states. These states defines how the end-to-end protection method is used by electronical devise 101 and 12. According to an embodiment the hardware component 102-E2E, and if applicable, the hardware component 101-E2E, are both in charge of a method for managing the several states of devices 102 and 101. According to an example, the hardware component 102-E2E and/or 101-E2E comprises a first state machine capable of implementing such a method for managing states, and a second state machine capable of implementing such an end-to-end protection method. According to one example, both state machines are disposed in the same component 101-E2E and a coupled together. According to another example, both state machines are each part of a general state machine of component 101-E2E. An embodiment of such a method is described in detail in relation with figure 7.

One advantage of using a hardware component, instead of a software implemented by a processor, is that it is easier to adapt the size of a single hardware component to a small responder 102 than having a processor able to implement a software.

According to one variant, the wired communication within system 100 can be replaced by a wireless communication.

Figure 2 illustrates an example of a structure of a message 200 transmitted during the communication within system 100 described in relation with Figure 1.

According to an example, message 200 is a packet of data composed, in the following order, of:
- an identifier 201 (SID);
- a first control field data 202 (CTRL);
- a payload 203 (PAYLOAD);
- a second control field data 204 (CRC1); and
- an ending field data 205 (ACK/EOF).

The identifier 201 represents the address of the recipient of message 200. According to an example, if message 200 is a unicast message sent by commander 101, the identifier represents the address of the unique responder 102 to which message 200 is intended to. According to another example, if message 200 is a multicast message sent by commander 101, the identifier represents the addresses of the several responder 102 to which message 200 is intended to. According to another example, if message 200 is a broadcast message sent by commander 101, the identifier is a code indicating that message 200 is sent to all responders.

The first control field data 202 may contain a data that represents, for example, the length of message 200, and more particularly the length of the payload 203. According to an example, the first control field 202 could be used to verify if message 200 have been sent entirely.

The payload 203 represents the command, the request, and/or the answer transmitted by message 200. According to an example, the maximum length of payload 203 can be of sixty-four bytes. According to an example, payload 203 is a data composed, in the following order, of:
- a third control field data 2031 (CRC2);
- bits 2032 (0xF);
- a value of a counter 2033 (CNT); and
- a data 2034 (DATA).

The third control field data 2031 (CRC2) may contain a data that represents, for example, a control data of the payload. According to an example, the third control field data 2031 comprises a cyclic redundancy check (CRC) data. An example of generation of the third control field data 2031 is detailed in relation with Figure 3.

The bits 2032 may represent optional extra bits that are used to conform message 200 to a standard size. Bits 2032 can have a different location in message 200. According to an example, bits 2032 are padding bits of the following value 2033.

The value of a counter 2033 that may represent the number of the message 200. According to an example, this value is incremented at each generation of a new message.

The data 2034 (DATA) contains the command, the request, and/or the answer transmitted by message 200.

The second control field data 204 may contains a data that represents, for example, a control data of the message 200. According to an example, the second control field data 204 comprises a cyclic redundancy check (CRC) data.

The ending field data 205 may contain a data indicating the end of message 200. It may be an acknowledgment bit or an ending bit.

According to a variant, message 200 may comprise only one or two of the control field data 202, 204 and 2031.

Figure 3 illustrates an example of the generation of the third control field data 2031 (CRC) of the message 200 described in relation with Figure 2.

According to an example, the third control field data 2031 is obtained by combination of the data 2034, the value of the counter 2033, the bit 2032, and a data identifier 301 (DATA ID).

According to one embodiment, the data identifier 301 is a data only known the device generating message 200, and the receiver of the message 200, for example, the commander of the communication, meaning commander 101. The data identifier 301 is not part of the message 200.

Figure 4 is a block diagram illustrating steps of a communication method 400 within system 100 described in relation with Figure 1. Communication method 400 uses the end-to-end protection method described in relation with Figure 1.

At an initial step 401 (Payload Generation), a first device, such as commander 101 or a responder 102 of system 100, wants to send a message to another second device, such as one or several responders 102 or commander 101. For that purpose, the first device prepares a message, and more particularly a payload.

At a step 402 (E2E protection data generation), consecutive to initial step 401, once the payload of the message in ready, the first device can generate one or more control field data, such as control field data of type of control field data 202, 204 and/or 2031 described in relation with Figure 2.

At a step 403 (Send), consecutive to step 402, the message comprising the payload and the one or more control field data is sent to the second device by using the communication bus 103.

At a step 404 (Reception), consecutive to step 403, the message is received by the second device.

At a step 405 (CRC Verification), consecutive to step 402, the second device executes a verification method of the one or more control field data of the message, for example the second control field data 204 described in relation with figure 2. If the verification is a success (Output Y of step 405), next step is a step 406 (Read Message), otherwise (Output N of step 405), next step is a step 407 (Ignore Message).

At step 406, consecutive to step 405, the verification has been a success, the second device can read the message.

At step 407, consecutive to step 405, the verification has not been a success, the second device cannot read the message. The message may be identified as a wrong message. Several options are possible here. The second device may ignore the message. The second device may prepare answer with an error code. The second device may record the information of receiving a wrong message.

Figure 5 is a block diagram illustrating steps of a control field data generation method 500 used within a communication method of type of communication method 400 described in relation with Figure 4. More particularly, method 500 can be used in step 402 of communication method 400.

At an initial step 501 (Start Control Field generation), a device, such as commander 101 or one of the responders 102, have prepared the payload of a message, and is ready to generate one or more control field data of the type of control field data 202, 204 and/or 2031 described in relation with Figure 2. In the example of Figure 5, the control field data generated is of the type of control field data 2031 described in relation with Figure 2.

At a step 502 (Message CNT), consecutive to initial step 501, the device stores a value of a message counter, of the type of the value 2033 described in relation with Figure 2.

At a step 503 (Padding), consecutive to step 502, the device conforms the size of its payload by adding, optionally, some extra bits, such as padding bits 2033.

At a step 504 (Calculate CRC), consecutive to step 503, the device uses the payload, the value of the message counter and the bit stored to calculate the control field data, for example the control field data 2031 described in relation with figure 2. According to a variant, a data of type of data identifier 301 described in relation with Figure 3, can also be used to calculate the control field data.

At a step 505 (Store CRC), consecutive to step 504, the control field data calculated previously is stored by the device.

At a step 506 (Increment CNT), consecutive to step 505, the message counter in incremented by the device. The value of the increment is dependent on the type of devices involved in the communication, or on the type of communication itself. According to an example, the value of the increment is equal to one.

According to an example, step 506 can be executed at any time during control field data generation method 500, not necessarily consecutively to step 505.

At a step 507 (End CRC Generation), consecutive to step 506, the device can add the control field data to its message and send it.

On advantage of such a generation method is that it can be directly executed by a hardware component, such as a logic circuit or a finite-state machine.

Figure 6 is a block diagram illustrating steps of a control field data verification method 600 used within a communication method of type of communication method 400 described in relation with Figure 4. More particularly, method 600 can be used in step 405 of communication method 400.

At an initial step 601 (Start Control field Check), a device, such as commander 101 or one of the responders 102, have received a message, and wants to know if it can be read or not.

At a step 602 (Calculate CRC), consecutive to initial step 601, the device uses the data comprised in the message, and, optionally, some data that are not comprised in the message, such as a data identifier of type of data identifier 301 described in relation with Figure 3, to calculate its own version of the control field data, such as control field data 2031 described in relation to figure 2, associated with the received message.

At a step 603 (Check CRC), consecutive to step 602, the device compares the control field data stored in the message, such as control field data 2031 described in relation to figure 2, and its own version calculated at step 602. If the verification is a success (Output Y of step 603), next step is a step 604 (Valid CNT ?), otherwise (Output N of step 603), next step is a step 605 (Increase Error CNT).

At step 604, consecutive to step 603, the control field data stored in the received message, for example the control field data 2031, and the version calculated at step 602 are identical. The value of a message counter stored in the message, of the type of the value 2033 described in relation with Figure 2, is compared to a limit value. According to an example, the limit value is fourteen. If the verification is not a success, that is if the value of the message counter is greater than the limit value, (Output N of step 604), next step is a step 606 (CNT?), otherwise, that is if the value of the message counter is inferior than the limit value, (Output Y of step 604), the next step is step 605, wherein the error counter is increased.

At step 605, consecutive to step 603 or to step 604, a value of an error counter stored by the device is increased, or incremented. According to an example, the error counter in increased. According to an example, the increasing increment is equal to two.

At step 606, consecutive to step 604, the value of the message counter comprised in the message, such as field data 2033 described in relation with Figure 2, is compared to a previous value of the message counter stored by the device. According to an example, the previous value has been stored during the verification of the control field data of a previous data. A comparison value Delta is obtained. If the verification is a success, that is the comparison data Delta is positive, (Output Y of step 606), next step is a step 607 (Delta), otherwise, that is the comparison value Delta is negative, (Output N of step 606), next step is a step 608 (Delta + Max). The following implementation is to avoid the use of negative numbers in calculation. An implementation using negative numbers is also possible and is obvious to the person skilled in the art in view of the presented implementation.

At step 607, consecutive to step 606, the value of the message counter comprised in the message is greater than the previous value of the message counter.

At step 608, consecutive to step 606, the value of the message counter comprised in the message is inferior to the previous value of the message counter, that is the comparison value is negative. In order to executes calculation only with positive number, the comparison data Delta is summed to the limit value. The result of this sum is stored by the device in the data Delta.

At a step 609 (Store CNT), consecutive to step 607 or step 608, the value of the message counter stored in the message in stored by the device. According to an example, the new value of the message counter replaces the previous one.

At a step 610 (Delta = 0?), consecutive to step 609, the data Delta is compared to zero. If the verification is not a success (Output N of step 610), next step is a step 611 (Delta <= Max), otherwise (Output Y of step 610), next step is step 605 wherein the error counter is incremented.

At step 605, consecutive to step 610, the data Delta is equal to zero. It means that the value of the message has not changed, and that the message may have been repeated. According to another example, if the value of the message has not changed, it could be the result of a counter overflow.

At step 611, the data Delta is different from zero. The data Delta is compared to a maximum data DeltaMax that represents the number of missed message that is acceptable by the device. If the verification is a success (Output Y of step 611), next step is a step 612 (Decrease Error CNT), otherwise (Output N of step 611), next step is step 605 wherein the error counter is incremented.

At step 612, the error counter is decreased. According to an example, the error counter in decreased. According to an example, the decreasing increment is equal to one.

At a step 613 (Accept Message), consecutive to step 612, the data Delta is inferior to the maximum data DeltaMax. It means that the device has not missed a message, or not too many messages. The device can accept the message and read it.

At a step 614 (Error CNT >= Max?), consecutive to step 605, the error counter has been incremented by the device following the detection of several problems. The device verifies if the error counter has not reached a maximum value. This step is optional. If the verification is a success (Output Y of step 614), next step is a step 615 (Enter Fail-safe State), otherwise (Output N of step 614), next step is step 616 (Drop Message)

At step 615, consecutive to step 614, the value of the error counter has reached the maximum value, the device cannot accept the message.

At step 616, consecutive to step 614, the value of the error counter has not reached the maximum value, the device does not accept the message, and drops it.

On advantage of such a verification method is that it can be directly executed by a hardware component, such as a logic circuit or a finite-state machine.

Figure 7 is a block diagram illustrating steps of a method 700 for managing states of an electronic of type of devices 101 or 102 described in relation with Figure 1. More particularly, method 700 can be used during the execution of a communication method of type of communication method 400.

It is considered here that an electronic device of the type of commander 101 or responders 102 described in relation with Figure 1, comprises at least three states:
- a no monitoring state 701 (No Monitor);
- an initialization state 702 (Init State); and
- a monitoring state 703 (Monitor).

When the electronic device is in the no monitoring state 701, all message received during a communication are accepted, but all device accesses to safety relevant registers are read-only. For that purpose, and according to an embodiment, a verification method of the type of verification method 600 of Figure 6 is partially executed, and only an error counter of the verification method of type of verification 600 of Figure 6, can be read and clear by other devices. Moreover, if the verification method detect a non-valid message, the error counter is not updated. According to an embodiment, when the electronic device is started or reset (bloc 704 (Start/Reset)), the electronic device enters directly into the no monitoring state.

When the electronic device is in the initialization state 702, the verification method, of type of verification 600 of Figure 6, is fully started and executed at each reception of a message. This means that the error counter can be updated, for example, increased. However, all device accesses to safety relevant registers are read-only. In other words, no device has the authorization to write in registers of the device.

A transition from the no monitoring state 701 to the initialization state 702 happens when the electronical device receives a valid message 705 (Valid Mess). The valid message 705 is a message that has been validated by the verification method, or the partially executed verification method. According to an example, when the verification method is the verification method 600 that is partially executed, a valid message is a message that has passed steps 601 to 604, 606, 607 and 609 to 612.

A transition from the initialization state 702 to the no monitoring state 701 happens when the error counter of the verification method reaches a limit 706 (Err Cnt Lim).

When the electronic device is in the monitoring state 703, the verification method, of type of verification 600 of Figure 6, is fully started and executed at each reception of a message, and, all device can have access to safety relevant registers, and can write data in safety relevant registers.

A transition from the initialization state 702 to the monitoring state 703 happens when a specific message 707 is received by the electronical device and validated by the verification method.

A transition from the monitoring state 703 to the no monitoring state 701 happens when the error counter of the verification method reaches a limit 708 (Err Cnt Rst).

On advantage of such a state managing method is that it can be directly executed by a hardware component, such as a logic circuit or a finite-state machine.

Various embodiments and variants have been described. Those skilled in the art will understand that certain features of these embodiments can be combined and other variants will readily occur to those skilled in the art.

Finally, the practical implementation of the embodiments and variants described herein is within the capabilities of those skilled in the art based on the functional description provided hereinabove.

## Claims

1. An electronical device (101, 102) adapted to execute a communication (400) via a communication bus (103), and comprising a hardware component (101-E2E, 102-E2E), different from a processor, and able to execute directly an end-to-end protection method (500, 600) of said communication (400),
said hardware component (101-E2E, 102-E2E) being capable of management states of said electronical device (101, 102), wherein:
- when said communication (400) starts and said device (101, 102) receives a first message that is validated by the end-to-end protection method (500, 600), the state of the electronical device (101, 102) changes from a no monitoring state (701) to a initialization state (702); and
- when said device (101, 102) receives a specific second message, the state of the electronical device (101, 102) changes from a the initialization state (702) to a monitoring state (703).

2. A method for managing states of an electronical device (101, 102) adapted to execute a communication (400) via a communication bus (103), said method being executed directly by a hardware component (101-E2E, 102-E2E) of said electronical device (101, 102) different from a processor, and able to execute directly an end-to-end protection method (500, 600) of said communication (400), wherein said method comprises the following steps :
- when said communication (400) starts and said device (101, 102) receives a first message that is validated by the end-to-end protection method (500, 600), the state of the electronical device (101, 102) changes from a no monitoring state (701) to an initialization state (702); and
- when said device (101, 102) receives a specific second message, the state of the electronical device (101, 102) changes from a the initialization state (702) to a monitoring state (703).

3. Device according to claim 1, or method according to claim 2, wherein said second specific message comprises a command that sets a configuration bit of said electronical device.

4. Device according to claim 1 or 3, or method according to claim 2 or 3, wherein, when the electronic device (101, 102) is in the initialization state (702) or in the monitoring state (703), if an error counter of the end-to-end protection method (500; 600) reaches limit value, the electronic device (101, 102) goes back to the no monitoring mode (702).

5. Device or method according to claim 4, wherein, when said device (101, 102) is in the no monitoring state (701), said error counter of the end-to-end protection method can be read and/or cleared.

6. Device according to any of claims 1, 3 to 5, or method according to any of claims 2 to 5, wherein, when said device (101, 102) is in the no monitoring state (701), all received messages are send to said device by the end-to-end protection method (500; 600).

7. Device according to any of claims 1, 3 to 6, or method according to any of claims 2 to 6, wherein said first message and said specific second message (200) comprise a control field data (202, 204, 2031).

8. Device or method according to claim 7, wherein, when said device (101, 102) is in the no monitoring state (701), a verification method (600) of said control field data, said verification method being comprised in said end-to-end protection method, is not executed at each reception of a message.

9. Device or method according to claim 7 or 8, wherein, when said device (101, 102) is in the initialization state (702), said verification method (600) is executed at each reception of a message.

10. Device or method according to 7 to 9, wherein, when said device (101, 102) is in the monitoring state (703), said verification method (600) is executed at each reception of a message.

11. Device according to any of claims 1, 3 to 10, or method according to any of claims 2 to 10, wherein the communication bus (103) is a controller area network bus.

12. Device according to any of claims 1, 3 to 11, or method according to any of claims 2 to 11, wherein the communication bus (103) is a controller area network flexible data-rate bus.

13. Device or method according to claim 12, wherein the communication bus (103) is a known under the trade name "controller area network flexible data-rate light bus".

14. Device or method according to claim 12, wherein the communication bus (103) is a known under the trade "name controller area network flexible data-rate XL bus".

15. Device according to any of claims 1, 3 to 14, or method according to any of claims 2 to 14, wherein the hardware component (101-E2E, 102-E2E) is a finite-state-machine.
